# EUROPEAN PATENT APPLICATION

(11) **EP 2 854 373 A1**
(43) Date of publication of application: **01.04.2015**
(21) Application number: 13856648.4
(22) Date of filing: 21.11.2013
(51) Int. Cl.: H04L 29/08

(54) **METHOD AND DEVICE FOR IMPORTING AND EXPORTING CONTACT**

(30) Priority: 21.11.2012 CN 201210476609
(71) Applicant: Huawei Technologies Co., Ltd., Longgang District Shenzhen, Guangdong 518129 (CN)
(72) Inventor: YANG, Fen, Shenzhen Guangdong 518129 (CN)
(74) Representative: Pfenning, Meinig & Partner GbR
(86) International application number: PCT/CN2013/087618
(87) International publication number: WO 2014/079378

(57) **Abstract**

The present invention discloses a method and an apparatus for importing and exporting a contact, and pertains to the communications field. The method includes: receiving a user identifier of a user and a data package that are sent by a terminal, where the data package includes a configuration file and a contact file that is corresponding to a contact group, the configuration file is used to store a correspondence between a group identifier ID of the contact group and a file ID of the contact file, and the contact file corresponding to the contact group is used to store contact information of a contact included in the contact group; acquiring, from the data package, the group ID of the contact group and the file ID of the contact file corresponding to the contact group; acquiring, from the data package according to the file ID of the contact file, the contact information of the contact included in the contact group; and storing a correspondence between the user identifier of the user, the group ID of the contact group, and the contact information of the contact included in the contact group. In the present invention, group information can be retained.

## Description

This application claims priority to Chinese Patent Application No. 201210476609.7, filed with the Chinese Patent Office on November 21, 2012 and entitled "METHOD AND APPARATUS FOR IMPORTING AND EXPORTING CONTACT", which is hereby incorporated by reference in its entirety.

### TECHNICAL FIELD

The present invention relates to the communications field, and in particular, to a method and an apparatus for importing and exporting a contact.

### BACKGROUND

A network address book is a technology for backing up, by using the Internet, a contact included in an address book in a terminal of a user, and the user may back up, by using a method for importing a contact, the contact included in the address book in the terminal of the user to the network address book located on a server.

A method for importing a contact is provided in the prior art, which is specifically as follows: a terminal sends a user identifier of a user and a contact file to a server, where the contact file is used to store contact information of a contact corresponding to the user; and the server receives the user identifier of the user and the contact file, and stores the user identifier of the user and the contact information of the contact included in the contact file.

In the prior art, group information of the contact is discarded when the contact is imported. Therefore, when the contact imported by the user is exported, group information of the contact is unavailable for the exported contact.

### SUMMARY

In order to retain group information in a process of importing and exporting a contact, embodiments of the present invention provide a method and an apparatus for importing and exporting a contact. The technical solutions are as follows:

A method for importing a contact is provided, where the method includes:
receiving a user identifier of a user and a data package that are sent by a terminal, where the data package includes a configuration file and a contact file that is corresponding to a contact group, the configuration file is used to store a correspondence between a group identifier ID of the contact group and a file ID of the contact file, and the contact file corresponding to the contact group is used to store contact information of a contact included in the contact group;
acquiring, from the data package, the group ID of the contact group and the file ID of the contact file corresponding to the contact group;
acquiring, from the data package according to the file ID of the contact file, the contact information of the contact included in the contact group; and
storing a correspondence between the user identifier of the user, the group ID of the contact group, and the contact information of the contact included in the contact group.

The acquiring, from the data package, the group ID of the contact group and the file ID of the contact file corresponding to the contact group includes:
acquiring the configuration file from the data package; and
acquiring, from the configuration file, the group ID of the contact group and the file ID of the contact file corresponding to the contact goup.

The acquiring, from the data package according to the file ID of the contact file, the contact information of the contact included in the contact group includes:
acquiring, from the data package according to the file ID of the contact file corresponding to the contact group, the contact file corresponding to the contact group; and
acquiring, from the contact file corresponding to the contact group, the contact information of the contact included in the contact group.

A method for exporting a contact is provided, where the method includes:
receiving an export request message sent by a terminal, where the export request message carries a user identifier of a user and a contact export manner;
if the contact export manner is a manner of exporting all contacts, acquiring a group ID of a corresponding contact group and contact information included in the contact group from a stored correspondence between a user identifier, a group identifier ID of a contact group, and contact information according to the user identifier of the user; and
sending the group ID of the contact group and the contact information included in the contact group to the terminal.

The sending the group ID of the contact group corresponding to the user and the contact information included in the contact group corresponding to the user to the terminal includes:
creating a contact file corresponding to the contact group according to the contact information included in the contact group, where the contact file corresponding to the contact group is used to store contact information of a contact included in the contact group;
storing, in a configuration file, a correspondence between the group ID of the contact group and a file ID of the contact file corresponding to the contact group; and
packaging the configuration file and the contact file that is corresponding to the contact group into a data package, and sending an export response message to the terminal, where the export response message carries the data package.

If the contact export manner is a manner of exporting one or more contacts, the export request message further carries a contact ID of the one or more contacts who need to be exported; and
before the sending the group ID of the contact group and the contact information included in the contact group to the terminal, the method further includes:
acquiring, from the stored correspondence between a user identifier, a group ID of a contact group, and contact information according to the user identifier of the user and the contact ID of the contact who needs to be exported, contact information of the contact who needs to be exported and a group ID of a contact group to which the contact who needs to be exported belongs.

If the contact export manner is a manner of exporting a contact group, the export request message further carries a group ID of the one or more contact groups that need to be exported; and
before the sending the group ID of the contact group and the contact information included in the contact group to the terminal, the method further includes:
acquiring contact information of a contact included in the contact group from the stored correspondence between a user identifier, a group ID of a contact group, and contact information according to the user identifier of the user and the group ID of the contact group.

An apparatus for importing a contact is provided, where the apparatus includes:
a first receiving module, configured to receive a user identifier of a user and a data package that are sent by a terminal, where the data package includes a configuration file and a contact file that is corresponding to a contact group, the configuration file is used to store a correspondence between a group identifier ID of the contact group and a file ID of the contact file, and the contact file corresponding to the contact group is used to store contact information of a contact included in the contact group;
a first acquiring module, configured to acquire, from the data package, the group ID of the contact group and the file ID of the contact file corresponding to the contact group;
a second acquiring module, configured to acquire, from the data package according to the file ID of the contact file, the contact information of the contact included in the contact group; and
a storage module, configured to store a correspondence between the user identifier of the user, the group ID of the contact group, and the contact information of the contact included in the contact group.

The first acquiring module includes:
a first acquiring unit, configured to acquire the configuration file from the data package; and
a second acquiring unit, configured to acquire, from the configuration file, the group ID of the contact group and the file ID of the contact file corresponding to the contact group.

The second acquiring module includes:
a third acquiring unit, configured to acquire, from the data package according to the file ID of the contact file corresponding to the contact group, the contact file corresponding to the contact group; and
a fourth acquiring unit, configured to acquire, from the contact file corresponding to the contact group, the contact information of the contact included in the contact group.

An apparatus for exporting a contact is provided, where the apparatus includes:
a second receiving module, configured to receive an export request message sent by a terminal, where the export request message carries a user identifier of a user and a contact export manner;
a third acquiring module, configured to: if the contact export manner is a manner of exporting all contacts, acquire a group ID of a corresponding contact group and contact information included in the contact group from a stored correspondence between a user identifier, a group identifier ID of a contact group, and contact information according to the user identifier of the user; and
a sending module, configured to send the group ID of the contact group and the contact information included in the contact group to the terminal.

The sending module includes:
a creating unit, configured to create a contact file corresponding to the contact group according to the contact information included in the contact group, where the contact file corresponding to the contact group is used to store contact information of a contact included in the contact group;
a storage unit, configured to store, in a configuration file, a correspondence between the group ID of the contact group and a file ID of the contact file corresponding to the contact group; and
a sending unit, configured to package the configuration file and the contact file that is corresponding to the contact group into a data package, and send an export response message to the terminal, where the export response message carries the data package.

If the contact export manner is a manner of exporting one or more contacts, the export request message further carries a contact ID of the one or more contacts who need to be exported; and
the apparatus further includes:
   a fourth acquiring module, configured to acquire, from the stored correspondence between a user identifier, a group ID of a contact group, and contact information according to the user identifier of the user and the contact ID of the contact who needs to be exported, contact information of the contact who needs to be exported and a group ID of a contact group to which the contact who needs to be exported belongs.

If the contact export manner is a manner of exporting a contact group, the export request message further carries group ID(s) of one or more contact groups that need to be exported; and
the apparatus further includes:
a fifth acquiring module, configured to acquire contact information of a contact included in the contact group from the stored correspondence between a user identifier, a group ID of a contact group, and contact information according to the user identifier of the user and the group ID of the contact group.

An apparatus for importing a contact is provided, where the apparatus includes a first memory and a first processor, which are configured to execute the method for importing a contact.

An apparatus for exporting a contact is provided, where the apparatus includes a second memory and a second processor, which are configured to execute the method for exporting a contact.

In this embodiment of the present invention, a user identifier of a user and a data package that are sent by a terminal are received, where the data package includes a configuration file and a contact file that is corresponding to a contact group, the configuration file is used to store a correspondence between a group ID of the contact group and a file ID of the contact file, and the contact file corresponding to the contact group is used to store contact information of a contact included in the contact group; the group ID of the contact group and the file ID of the contact file corresponding to the contact group are acquired from the configuration file in the data package; the contact information of the contact included in the contact group is acquired from the data package according to the file ID of the contact file; and a correspondence between the user identifier of the user, the group ID of the contact group, and the contact information of the contact included in the contact group is stored. In this way, group information of the contact is retained when the contact is imported; when the contact is exported, the contact information of the contact who needs to be exported and the contact group to which the contact belongs may be acquired from the correspondence between the user identifier of the user, the group ID of the contact group and the contact information, and therefore, when the contact is exported, the group information of the contact is also retained.

### BRIEF DESCRIPTION OF DRAWINGS

FIG. 1 is a flowchart of a method for importing a contact according to an embodiment of the present invention;
FIG. 2 is a flowchart of another method for importing a contact according to an embodiment of the present invention;
FIG 3 is a flowchart of a method for exporting a contact according to an embodiment of the present invention;
FIG 4 is a flowchart of another method for exporting a contact according to an embodiment of the present invention;
FIG. 5 is a flowchart of another method for exporting a contact according to an embodiment of the present invention;
FIG. 6 is a flowchart of another method for exporting a contact according to an embodiment of the present invention;
FIG. 7 is a schematic structural diagram of an apparatus for importing a contact according to an embodiment of the present invention;
FIG. 8 is a schematic structural diagram of an apparatus for exporting a contact according to an embodiment of the present invention;
FIG. 9 is a schematic structural diagram of another apparatus for importing a contact according to an embodiment of the present invention; and
FIG. 10 is a schematic structural diagram of another apparatus for exporting a contact according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

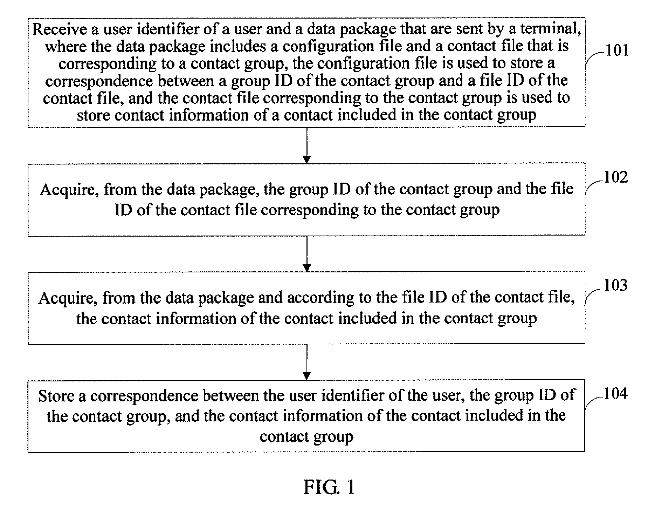

Referring to FIG. 1, an embodiment of the present invention provides a method for importing a contact, where the method includes:

Step 101: Receive a user identifier of a user and a data package that are sent by a terminal, where the data package includes a configuration file and a contact file that is corresponding to a contact group, the configuration file is used to store a correspondence between a group ID of the contact group and a file ID of the contact file, and the contact file corresponding to the contact group is used to store contact information of a contact included in the contact group.

Step 102: Acquire, from the data package, the group ID of the contact group and the file ID of the contact file corresponding to the contact group.

Step 103: Acquire, from the data package according to the file ID of the contact file, the contact information of the contact included in the contact group.

Step 104: Store a correspondence between the user identifier of the user, the group ID of the contact group, and the contact information of the contact included in the contact group.

In this embodiment of the present invention, a user identifier of a user and a data package that are sent by a terminal are received, where the data package includes a configuration file and a contact file that is corresponding to a contact group, the configuration file is used to store a correspondence between a group ID of the contact group and a file ID of the contact file, and the contact file corresponding to the contact group is used to store contact information of a contact included in the contact group; the group ID of the contact group and the file ID of the contact file corresponding to the contact group are acquired from the configuration file in the data package; the contact information of the contact included in the contact group is acquired from the data package according to the file ID of the contact file; and a correspondence between the user identifier of the user, the group ID of the contact group, and the contact information of the contact included in the contact group is stored. In this way, group information of the contact of the user is retained when the contact is imported.

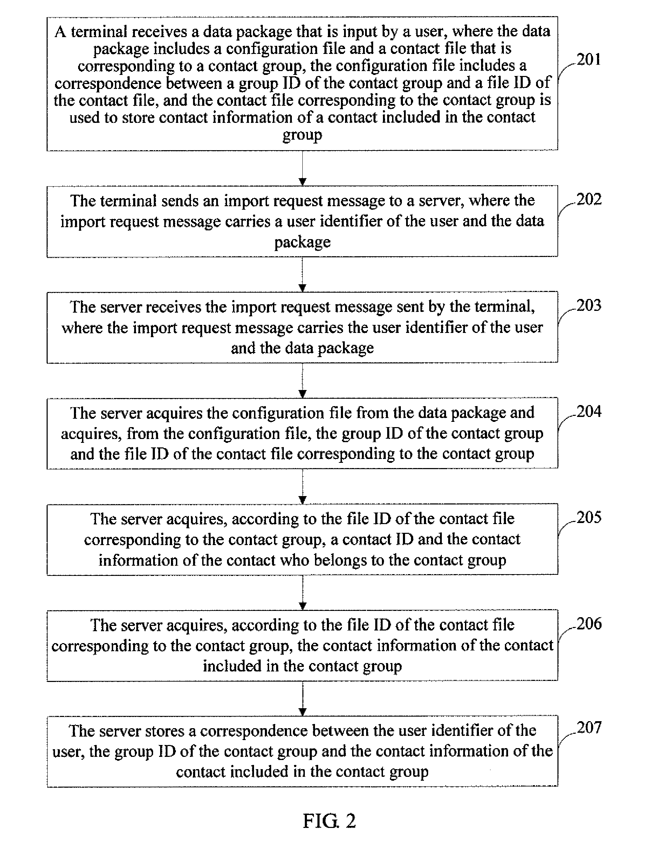

On the basis of the embodiment shown in FIG. 1, an embodiment of the present invention provides a method for importing a contact. Referring to FIG. 2, the method includes:

Step 201: A terminal acquires a data package, where the data package includes a configuration file and a contact file that is corresponding to a contact group, the configuration file includes a correspondence between a group ID of the contact group and a file ID of the contact file, and the contact file corresponding to the contact group is used to store contact information of a contact included in the contact group.

The contact information of the contact includes at least a contact ID of the contact, and may further include information such as a name and/or a birth date of the contact.

The terminal may generate a data package in advance, and a user selects a data package of a contact needs to be imported and inputs to the terminal.

The terminal may generate the data package according to the following process, which is specifically:

The user classifies corresponding contacts into one or more contact groups. For any one of the contact groups, the terminal stores, in a blank contact file, contact information of a contact included in the contact group, so as to obtain a contact file corresponding to the contact group, and stores, in a configuration file, a correspondence between a group ID of the contact group and a file ID of the contact file corresponding to the contact group. For each of the other contact groups, an operation is performed according to the same process, so as to obtain a contact file separately corresponding to each of the other contact groups; a correspondence between a group ID of each of the other contact groups and a file ID of the contact file corresponding to each of the other contact groups is stored in the configuration file; and then the contact file corresponding to each contact group and the configuration file are packaged into a data package.

The group ID of the contact group may be a name of the contact group, and may also be another identifier that can identify the contact group.

A name of the configuration file included in the data package may be the same as a name of the data package; a format of the configuration file may be an XML (Extensible Markup Language, Extensible Markup Language) format, a txt format, or the like.

The file ID of the contact file corresponding to the contact group may be the same as or different from the group ID of the contact group. A format of the contact file may be a vCard (Versit Card, a file format standard for an electronic business card) format, a CSV (Comma Separated Values, comma separated values) format, or the like. An extension of the contact file in the vCard format is .vcf, and an extension of the contact file in the CSV format is .CSV Contact files corresponding to multiple contact groups included in one data package must be in a same format.

Step 202: The terminal sends an import request message to a server, where the import request message carries a user identifier of a user and the data package.

Step 203: The server receives the import request message sent by the terminal, where the import request message carries the user identifier of the user and the data package.

Step 204: The server acquires the configuration file from the data package and acquires, from the configuration file, the group ID of the contact group and the file ID of the contact file corresponding to the contact group.

Specifically, the server acquires the configuration file from the data package according to the name of the data package and/or the extension of the configuration file included in the data package; sets, in the correspondence between the group ID of the contact group and the file ID of the contact file included in the configuration file, a pointer that points to a first record; and acquires, from the record to which the pointer points, the group ID of the contact group and the file ID of the contact file corresponding to the contact group.

If the name of the data package is the same as the name of the configuration file, the configuration file may be directly searched for in the data package according to the name of the data package.

Because the format of the configuration file included in the data package is the XML format or the txt format, a configuration file in the XML format or the txt format may be found in the data package.

Step 205: The server acquires, according to the file ID of the contact file corresponding to the contact group, the contact information of the contact included in the contact group.

Specifically, the server acquires, from the data package according to the file ID of the contact file corresponding to the contact group, the contact file corresponding to the contact group, and acquires, from the contact file corresponding to the contact group, the contact information of the contact included in the contact group.

Step 206: The server stores a correspondence between the user identifier of the user, the group ID of the contact group, and the contact information of the contact included in the contact group.

Specifically, the server stores, in a correspondence between a user identifier, a group ID of a contact group, and contact information, the user identifier of the user, the group ID of the contact group, and the contact information of the contact included in the contact group.

Further, the server determines whether a record to which the pointer points is the last record in the correspondence between the group ID of the contact group and the file ID of the contact file included in the configuration file. If no, the pointer is set to point to a next record, the group ID of the contact group and the file ID of the contact file corresponding to the contact group are read from the record to which the pointer points, and then the process returns to step 205 for execution. If yes, the server completes importing the contact.

Further, after completing importing the contact, the server sends an import success message to the terminal.

Accordingly, the terminal receives the import success message and displays a prompt message "Import succeeded" to the user.

In this embodiment of the present invention, a terminal receives a data package that is input by a user, and then sends a user identifier of the user and the data package to a server; the server acquires, from a configuration file in the data package, a group ID of a contact group corresponding to the user and a file ID of a contact file corresponding to the contact group, acquires, from the data package according to the file ID of the contact file, contact information of a contact included in the contact group, and stores a correspondence between the user identifier of the user, the group ID of the contact group, and the contact information of the contact included in the contact group. In this way, group information of the contact of the user is retained when the contact is imported.

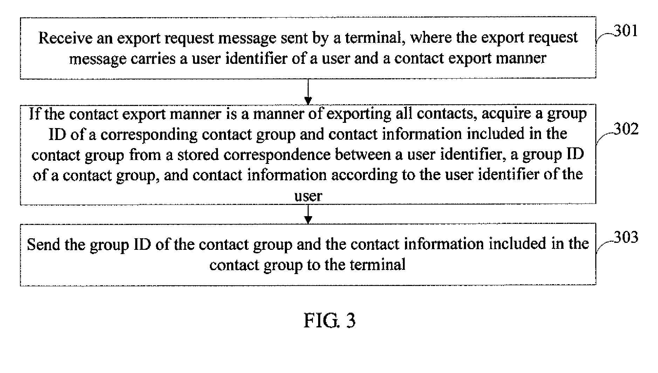

Referring to FIG 3, an embodiment of the present invention provides a method for exporting the contact imported in the embodiment shown in FIG 1, where the method includes:
Step 301: Receive an export request message sent by a terminal, where the export request message carries a user identifier of a user and a contact export manner.
Step 302: If the contact export manner is a manner of exporting all contacts, acquire a group ID of a corresponding contact group and contact information included in the contact group from a stored correspondence between a user identifier, a group ID of a contact group, and contact information according to the user identifier of the user.
Step 303: Send the group ID of the contact group and the contact information included in the contact group to the terminal.

In this embodiment of the present invention, an export request message sent by a terminal is received, where the export request message carries a user identifier of a user and a contact export manner; if the contact export manner is a manner of exporting all contacts, a group ID of a corresponding contact group and contact information included in the contact group are acquired from a stored correspondence between a user identifier, a group ID of a contact group, and contact information according to the user identifier of the user; and the group ID of the contact group and the contact information included in the contact group are sent to the terminal. A contact group to which a contact who needs to be exported belongs is acquired when the contact is exported. In this way, group information of the contact is retained when the contact is exported.

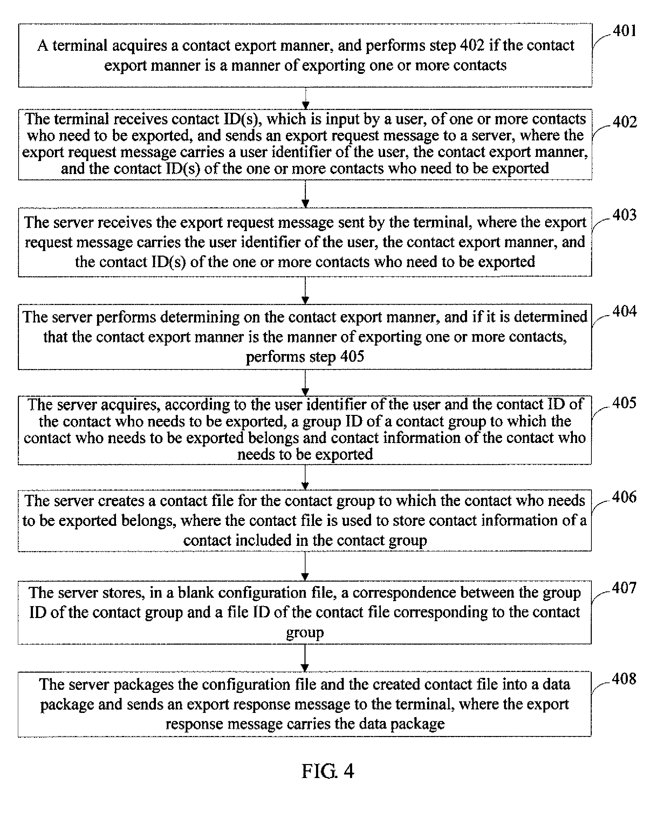

On the basis of the embodiment shown in FIG 3, an embodiment of the present invention provides a method for exporting the contact imported in the embodiment shown in FIG. 2. It is assumed that a user inputs, to a terminal, a manner of exporting one or more contacts and a contact ID of the one or more contacts who need to be exported, and then contact information of the one or more contacts who need to be exported is exported by using the method in this embodiment. Referring to FIG 4, the method includes:

Step 401: A terminal acquires a contact export manner, and performs step 402 if the contact export manner is a manner of exporting one or more contacts.

Specifically, if the user inputs a contact export manner, the terminal receives the contact export manner that is input by the user; if the user does not input a contact export manner, a preset contact export manner is acquired and the preset contact export manner is a manner of exporting all contacts. It is assumed that in this embodiment, the terminal receives the contact export manner that is input by the user, and the contact export manner that is input by the user is the manner of exporting one or more contacts.

If the contact export manner that is input by the user is the manner of exporting one or more contacts, the user further needs to input, to the terminal, a contact ID of the one or more contacts who need to be exported.

Further, the user may further input, to the terminal, information such as a storage path, a file format and/or a data package name.

Accordingly, the terminal receives the information that is input by the user, such as a storage path, a file format and/or a data package name.

The file format may be a CSV format or a vCard format.

Step 402: The terminal receives a contact ID, which is input by a user, of the one or more contacts who need to be exported, and sends an export request message to a server, where the export request message carries a user identifier of the user, the contact export manner, and the contact ID of the one or more contacts who need to be exported.

Further, if the terminal receives the information that is input by the user, such as a file format and/or a data package name, the export request message further carries the information that is input by the user, such as a file format and/or a data package name.

Step 403: The server receives the export request message sent by the terminal, where the export request message carries the user identifier of the user, the contact export manner, and the contact ID of the one or more contacts who need to be exported.

Further, the export request message may further carry the information that is input by the user, such as a file format and/or a data package name.

Step 404: The server performs determining on the contact export manner, and if it is determined that the contact export manner is the manner of exporting one or more contacts, performs step 405.

Step 405: The server acquires, according to the user identifier of the user and the contact ID of the contact who needs to be exported, a group ID of a contact group to which the contact who needs to be exported belongs and contact information of the contact who needs to be exported.

Specifically, the server acquires, from a stored correspondence between a user identifier, a group ID of a contact group, and contact information according to the user identifier of the user and the contact ID of the contact who needs to be exported, contact information that includes the contact ID of the contact who needs to be exported, and the group ID of the contact group to which the contact who needs to be exported belongs, where the contact information that includes the contact ID of the contact who needs to be exported is the contact information of the contact who needs to be exported.

Step 406: The server creates a contact file for the contact group to which the contact who needs to be exported belongs, where the contact file is used to store contact information of a contact included in the contact group.

Specifically, the server acquires a file format; creates a blank contact file for the contact group to which the contact who needs to be exported belongs, where a format of the contact file is the acquired file format; and stores, in the contact file, the contact information of the contact included in the contact group, so as to obtain a contact file corresponding to the contact group.

The acquiring a file format may specifically be:
if the export request message carries a file format, the carried file format is acquired from the export request message; if the export request message does not carry a file format, a preset file format is acquired.

The preset file format may be a CSV format or a vCard format.

If multiple contacts need to be exported and the multiple contacts belong to different contact groups, a contact file corresponding to each contact group is created according to the foregoing step 406.

Step 407: The server stores, in a blank configuration file, a correspondence between the group ID of the contact group and a file ID of the contact file corresponding to the contact group.

A format of the configuration file may be a txt format, an XML format, or the like.

Step 408: The server packages the configuration file and the created contact file into a data package and sends an export response message to the terminal, where the export response message carries the data package.

Further, if the export request message carries a data package name, the server names the packaged data package the data package name that is carried in the export request message; if the export request message does not carry a data package name, the server acquires a preset data package name and names the packaged data package the preset data package name.

Further, the terminal receives the data package sent by the server. If the user inputs a storage path, the data package is stored according to the storage path that is input by the user; if the user does not input a storage path, the data package is stored according to a preset storage path, and a prompt message "Export succeeded" is displayed to the user.

If one contact needs to be exported or multiple contacts who need to be exported belong to a same contact group, a contact file corresponding to the contact group is created. In this case, the server may directly send the contact file corresponding to the contact group to the terminal.

In this embodiment of the present invention, after receiving an export request message sent by a terminal, a server acquires, according to a user identifier of a user and a contact ID of a contact who needs to be exported that are carried in the export request message, a group ID of a contact group to which the contact who needs to be exported belongs and contact information of the contact who needs to be exported; stores, in a contact file, contact information of a contact included in the contact group, so as to obtain a contact file corresponding to the contact group; stores, in a configuration file, a correspondence between the group ID of the contact group and a file ID of the contact file corresponding to the contact group; and packages the configuration file and the contact file into a data package and sends the data package to the terminal, thereby retaining group information of the contact.

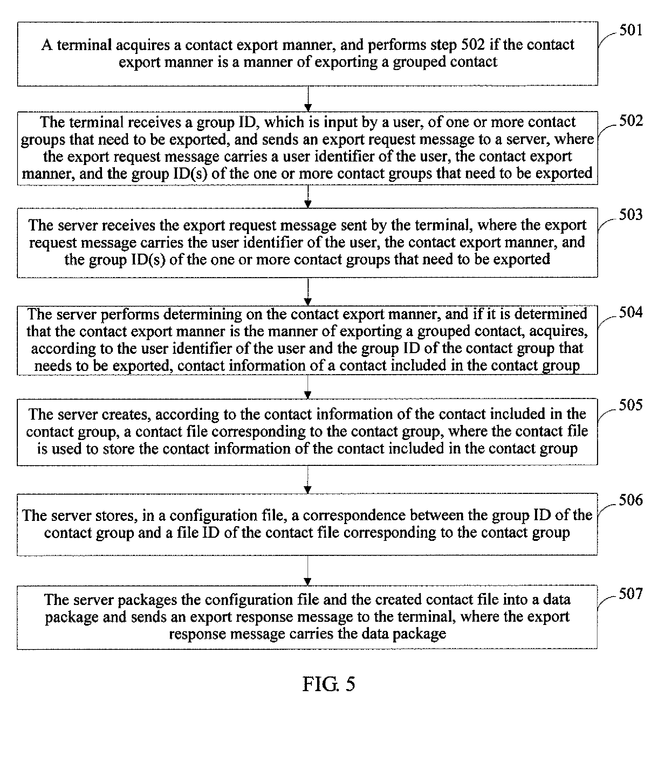

On the basis of the embodiment shown in FIG 3, an embodiment of the present invention provides a method for exporting the contact imported in the embodiment shown in FIG 2. It is assumed that a user inputs, to a terminal, a manner of exporting a contact group and group ID(s) of one or more contact groups that need to be exported, and then contact information of a contact included in a contact group that needs to be exported is exported by using the method in this embodiment. Referring to FIG. 5, the method includes:

Step 501: A terminal acquires a contact export manner, and performs step 502 if the contact export manner is a manner of exporting a contact group.

Specifically, if a user inputs a contact export manner, the terminal receives the contact export manner that is input by the user; if the user does not input a contact export manner, a preset contact export manner is acquired. It is assumed that in this embodiment, the terminal receives the contact export manner that is input by the user, and the contact export manner that is input by the user is the manner of exporting a contact group.

If the contact export manner that is input by the user is the manner of exporting a contact group, the user further needs to input, to the terminal, group ID(s) of one or more contact groups that need to be exported.

Further, the user may further input, to the terminal, information such as a storage path, a file format and/or a data package name.

Accordingly, the terminal receives the information that is input by the user, such as a storage path, a file format and/or a data package name.

The file format may be a CSV format or a vCard format.

Step 502: The terminal receives a group ID, which is input by a user, of one or more contact groups that need to be exported, and sends an export request message to a server, where the export request message carries a user identifier of the user, the contact export manner, and the group ID of the one or more contact groups that need to be exported.

Further, if the terminal receives the information that is input by the user, such as a file format and/or a data package name, the export request message further carries the information that is input by the user, such as a file format and/or a data package name.

Step 503: The server receives the export request message sent by the terminal, where the export request message carries the user identifier of the user, the contact export manner, and the group ID of the one or more contact groups that need to be exported.

Further, the export request message may further carry the information that is input by the user, such as a file format and/or a data package name.

Step 504: The server performs determining on the contact export manner, and if it is determined that the contact export manner is the manner of exporting a contact group, acquires, according to the user identifier of the user and the group ID of the contact group that needs to be exported, contact information of a contact included in the contact group.

Specifically, the server performs determining on the contact export manner, and if it is determined that the contact export manner is the manner of exporting a contact group, acquires, from a stored correspondence between a user identifier, a group ID of a contact group, and contact information according to the user identifier of the user and the group ID of the contact group that needs to be exported, the contact information of the contact included in the contact group that needs to be exported.

Step 505: The server creates, according to the contact information of the contact included in the contact group, a contact file corresponding to the contact group, where the contact file is used to store the contact information of the contact included in the contact group.

Specifically, the server acquires a file format; creates a blank contact file for the contact group, where a format of the contact file is the acquired file format; and stores, in the contact file, the contact information of the contact included in the contact group, so as to obtain a contact file corresponding to the contact group.

The acquiring a file format may specifically be:
if the export request message carries a file format, the carried file format is acquired from the export request message; if the export request message does not carry a file format, a preset file format is acquired.

The preset file format may be a CSV format or a vCard format.

If contacts of multiple contact groups need to be exported, a contact file separately corresponding to each of the other contact groups that need to be exported is created according to the foregoing step 505.

Step 506: The server stores, in a configuration file, a correspondence between the group ID of the contact group and a file ID of the contact file corresponding to the contact group.

A format of the configuration file may be a txt format, an XML format, or the like.

Step 507: The server packages the configuration file and the created contact file into a data package and sends an export response message to the terminal, where the export response message carries the data package.

Further, if the export request message carries a data package name, the server may name the packaged data package the data package name that is carried in the export request message; if the export request message does not carry a data package name, the server may acquire a preset data package name and name the packaged data package the preset data package name.

Further, the terminal receives the data package sent by the server. If the user inputs a storage path, the data package is stored according to the storage path that is input by the user; if the user does not input a storage path, the data package is stored according to a preset storage path, and a prompt message "Export succeeded" is displayed to the user.

If one contact group needs to be exported, only one contact file corresponding to the contact group that needs to be exported is created. In this case, the server may directly send the contact file to the terminal.

In this embodiment of the present invention, after receiving an export request message sent by a terminal, a server acquires, according to a user identifier of a user and a group ID of a contact group that needs to be exported that are carried in the export request message, contact information of a contact included in the contact group; stores, in a contact file, the contact information of the contact included in the contact group; stores, in a configuration file, a correspondence between the group ID of the contact group and a file ID of a contact file corresponding to the contact group; and packages the configuration file and the contact file into a data package and sends the data package to the terminal, thereby retaining group information of the contact.

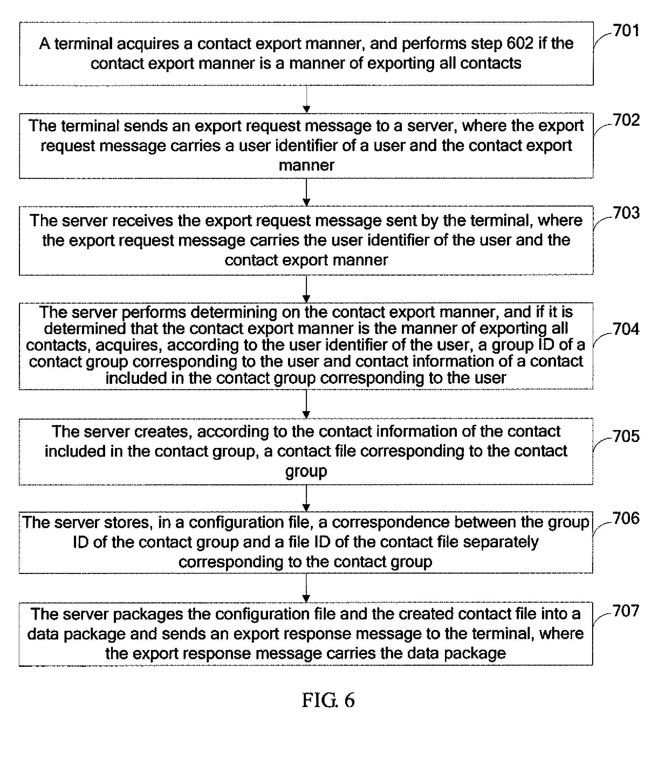

On the basis of the embodiment shown in FIG. 3, an embodiment of the present invention provides a method for exporting the contact imported in the embodiment shown in FIG. 2. A contact export manner is a manner of exporting all contacts, and contact information of all contacts corresponding to a user is exported according to the manner of exporting all contacts and by using the method in this embodiment. Referring to FIG. 6, the method includes:

Step 601: A terminal acquires a contact export manner, and performs step 602 if the contact export manner is a manner of exporting all contacts.

Specifically, if a user inputs a contact export manner, the terminal receives the contact export manner that is input by the user and it is assumed that the contact export manner that is input by the user is the manner of exporting all contacts; if the user does not input a contact export manner, a preset contact export manner is acquired and the preset contact export manner is the manner of exporting all contacts.

Further, the user may further input, to the terminal, information such as a storage path, a file format and/or a data package name.

Accordingly, the terminal receives the information that is input by the user, such as a storage path, a file format and/or a data package name.

The file format may be a CSV format or a vCard format.

Step 602: The terminal sends an export request message to a server, where the export request message carries a user identifier of a user and the contact export manner.

Further, if the terminal receives the information that is input by the user, such as a file format and/or a data package name, the export request message further carries the information that is input by the user, such as a file format and/or a data package name.

Step 603: The server receives the export request message sent by the terminal, where the export request message carries the user identifier of the user and the contact export manner.

Further, the export request message may further carry the information that is input by the user, such as a file format and/or a data package name.

Step 604: The server performs determining on the contact export manner, and if it is determined that the contact export manner is the manner of exporting all contacts, acquires, according to the user identifier of the user, a group ID of a contact group corresponding to the user and contact information of a contact included in the contact group corresponding to the user.

Specifically, the server performs determining on the contact export manner, and if it is determined that the contact export manner is the manner of exporting all contacts, acquires, from a stored correspondence between a user identifier, a group ID of a contact group, and contact information according to the user identifier of the user, the group ID of the contact group corresponding to the user and contact information included in the contact group corresponding to the user.

Step 605: The server creates, according to the contact information of the contact included in the contact group, a contact file corresponding to the contact group.

Specifically, the server acquires a file format; creates a blank contact file for the contact group, where a format of the contact file is the acquired file format; and stores, in the contact file, the contact information of the contact included in the contact group, so as to obtain a contact file corresponding to the contact group.

The acquiring a file format may specifically be:
if the export request message carries a file format, the carried file format is acquired from the export request message; if the export request message does not carry a file format, a preset file format is acquired.

The preset file format may be a CSV format or a vCard format.

Step 606: The server stores, in a configuration file, a correspondence between the group ID of the contact group and a file ID of the contact file separately corresponding to the contact group.

A format of the configuration file may be a txt format, an XML format, or the like.

Step 607: The server packages the configuration file and the created contact file into a data package and sends an export response message to the terminal, where the export response message carries the data package.

Further, if the export request message carries a data package name, the server names the packaged data package the data package name that is carried in the export request message; if the export request message does not carry a data package name, the server acquires a preset data package name and names the packaged data package the preset data package name.

Further, the terminal receives the data package sent by the server. If the user inputs a storage path, the data package is stored according to the storage path that is input by the user; if the user does not input a storage path, the data package is stored according to a preset storage path, and a prompt message "Export succeeded" is displayed to the user.

In this embodiment of the present invention, after receiving an export request message sent by a terminal, a server acquires, from a stored correspondence between a user identifier, a group ID of a contact group, and contact information according to a user identifier of a user carried in the export request message, a group ID of a contact group corresponding to the user and contact information of a contact included in the contact group; stores, in a blank configuration file, a correspondence between the group ID of the contact group and a file ID of a contact file corresponding to the contact group; and packages the configuration file and the contact file into a data package and sends the data package to the terminal, thereby retaining group information of the contact.

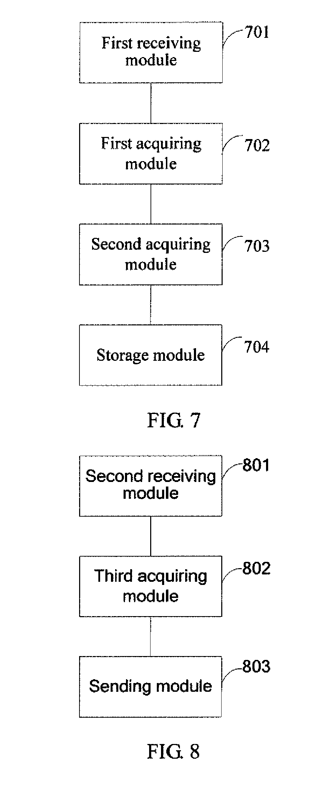

Referring to FIG 7, an embodiment of the present invention provides an apparatus for importing a contact, where the apparatus includes:
a first receiving module 701, configured to receive a user identifier of a user and a data package that are sent by a terminal, where the data package includes a configuration file and a contact file that is corresponding to a contact group, the configuration file is used to store a correspondence between a group identifier ID of the contact group and a file ID of the contact file, and the contact file corresponding to the contact group is used to store contact information of a contact included in the contact group;
a first acquiring module 702, configured to acquire, from the data package, the group ID of the contact group and the file ID of the contact file corresponding to the contact group;
a second acquiring module 703, configured to acquire, from the data package according to the file ID of the contact file, the contact information of the contact included in the contact group; and
a storage module 704, configured to store a correspondence between the user identifier of the user, the group ID of the contact group, and the contact information of the contact included in the contact group.

The first acquiring module 702 includes:
a first acquiring unit, configured to acquire the configuration file from the data package; and
a second acquiring unit, configured to acquire, from the configuration file, the group ID of the contact group and the file ID of the contact file corresponding to the contact group.

The second acquiring module 703 includes:
a third acquiring unit, configured to acquire, from the data package according to the file ID of the contact file corresponding to the contact group, the contact file corresponding to the contact group; and
a fourth acquiring unit, configured to acquire, from the contact file corresponding to the contact group, the contact information of the contact included in the contact group.

In this embodiment of the present invention, a user identifier of a user and a data package that are sent by a terminal are received, where the data package includes a configuration file and a contact file that is corresponding to a contact group, the configuration file is used to store a correspondence between a group ID of the contact group and a file ID of the contact file, and the contact file corresponding to the contact group is used to store contact information of a contact included in the contact group; the group ID of the contact group and the file ID of the contact file corresponding to the contact group are acquired from the configuration file in the data package; the contact information of the contact included in the contact group is acquired from the data package according to the file ID of the contact file; and a correspondence between the user identifier of the user, the group ID of the contact group, and the contact information of the contact included in the contact group is stored. In this way, group information of the contact is retained when the contact is imported.

Referring to FIG 8, an embodiment of the present invention provides an apparatus for exporting a contact, where the apparatus includes:
a second receiving module 801, configured to receive an export request message sent by a terminal, where the export request message carries a user identifier of a user and a contact export manner;
a third acquiring module 802, configured to: if the contact export manner is a manner of exporting all contacts, acquire a group ID of a corresponding contact group and contact information included in the contact group from a stored correspondence between a user identifier, a group identifier ID of a contact group, and contact information according to the user identifier of the user; and
a sending module 803, configured to send the group ID of the contact group and the contact information included in the contact group to the terminal.

The sending module includes:
a creating unit, configured to, create a contact file corresponding to the contact group according to the contact information included in the contact group, where the contact file corresponding to the contact group is used to store contact information of a contact included in the contact group;
a storage unit, configured to store, in a configuration file, a correspondence between the group ID of the contact group and a file ID of the contact file corresponding to the contact group; and
a sending unit, configured to package the configuration file and the contact file that is corresponding to the contact group into a data package, and send an export response message to the terminal, where the export response message carries the data package.

If the contact export manner is a manner of exporting one or more contacts, the export request message further carries a contact ID of the one or more contacts who need to be exported.

The apparatus further includes:
a fourth acquiring module, configured to acquire, from the stored correspondence between a user identifier, a group ID of a contact group, and contact information according to the user identifier of the user and the contact ID of the contact who needs to be exported, contact information of the contact who needs to be exported and a group ID of a contact group to which the contact who needs to be exported belongs.

If the contact export manner is a manner of exporting a contact group, the export request message further carries group ID(s) of one or more contact groups that need to be exported.

The apparatus further includes:
a fifth acquiring module, configured to acquire contact information of a contact included in the contact group from the stored correspondence between a user identifier, a group ID of a contact group, and contact information according to the user identifier of the user and the group ID of the contact group.

In this embodiment of the present invention, an export request message sent by a terminal is received, where the export request message carries a user identifier of a user and a contact export manner; if the contact export manner is a manner of exporting all contacts, a group ID of a corresponding contact group and contact information included in the contact group are acquired from a stored correspondence between a user identifier, a group ID of a contact group, and contact information according to the user identifier of the user; and the group ID of the contact group and the contact information included in the contact group are sent to the terminal. A contact group to which a contact who needs to be exported belongs is acquired when the contact is exported. In this way, group information of the contact is retained when the contact is exported.

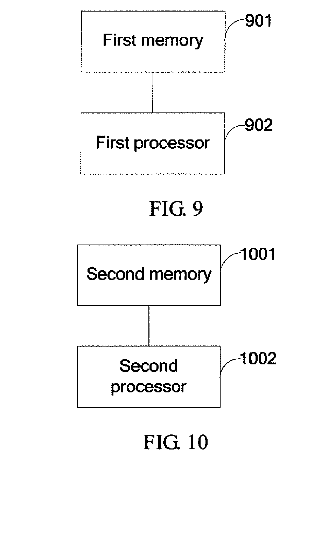

Referring to FIG 9, an embodiment of the present invention provides an apparatus for importing a contact, where the apparatus includes a first memory 901 and a first processor 902, which are configured to execute the following method for importing a contact:
receiving a user identifier of a user and a data package that are sent by a terminal, where the data package includes a configuration file and a contact file that is corresponding to a contact group, the configuration file is used to store a correspondence between a group identifier ID of the contact group and a file ID of the contact file, and the contact file corresponding to the contact group is used to store contact information of a contact included in the contact group;
acquiring, from the data package, the group ID of the contact group and the file ID of the contact file corresponding to the contact group;
acquiring, from the data package according to the file ID of the contact file, the contact information of the contact included in the contact group; and
storing a correspondence between the user identifier of the user, the group ID of the contact group, and the contact information of the contact included in the contact group.

The acquiring, from the data package, the group ID of the contact group and the file ID of the contact file corresponding to the contact group includes:
acquiring the configuration file from the data package; and
acquiring, from the configuration file, the group ID of the contact group and the file ID of the contact file corresponding to the contact group.

The acquiring, from the data package according to the file ID of the contact file, the contact information of the contact included in the contact group includes:
acquiring, from the data package according to the file ID of the contact file corresponding to the contact group, the contact file corresponding to the contact group; and
acquiring, from the contact file corresponding to the contact group, the contact information of the contact included in the contact group.

Referring to FIG 10, an embodiment of the present invention provides an apparatus for importing a contact, where the apparatus includes a second memory 1001 and a second processor 1002, which are configured to perform the following method for exporting a contact:
receiving an export request message sent by a terminal, where the export request message carries a user identifier of a user and a contact export manner;
if the contact export manner is a manner of exporting all contacts, acquiring a group ID of a corresponding contact group and contact information included in the contact group from a stored correspondence between a user identifier, a group identifier ID of a contact group, and contact information according to the user identifier of the user; and
sending the group ID of the contact group and the contact information included in the contact group to the terminal.

The sending the group ID of the contact group corresponding to the user and the contact information included in the contact group corresponding to the user to the terminal includes:
creating a contact file corresponding to the contact group according to the contact information included in the contact group, where the contact file corresponding to the contact group is used to store contact information of a contact included in the contact group;
storing, in a configuration file, a correspondence between the group ID of the contact group and a file ID of the contact file corresponding to the contact group; and
packaging the configuration file and the contact file that is corresponding to the contact group into a data package, and sending an export response message to the terminal, where the export response message carries the data package.

If the contact export manner is a manner of exporting one or more contacts, the export request message further carries a contact ID of the one or more contacts who need to be exported.

Before the sending the group ID of the contact group and the contact information included in the contact group to the terminal, the method further includes:
acquiring, from the stored correspondence between a user identifier, a group ID of a contact group, and contact information according to the user identifier of the user and the contact ID of the contact who needs to be exported, contact information of the contact who needs to be exported and a group ID of a contact group to which the contact who needs to be exported belongs.

If the contact export manner is a manner of exporting a contact group, the export request message further carries group ID(s) of one or more contact groups that need to be exported.

Before the sending the group ID of the contact group and the contact information included in the contact group to the terminal, the method further includes:
acquiring contact information of a contact included in the contact group from the stored correspondence between a user identifier, a group ID of a contact group, and contact information according to the user identifier of the user and the group ID of the contact group.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A method for importing a contact, wherein the method comprises:
receiving a user identifier of a user and a data package that are sent by a terminal, wherein the data package comprises a configuration file and a contact file that is corresponding to a contact group, the configuration file is used to store a correspondence between a group identifier ID of the contact group and a file ID of the contact file, and the contact file corresponding to the contact group is used to store contact information of a contact comprised in the contact group;
acquiring, from the data package, the group ID of the contact group and the file ID of the contact file corresponding to the contact group;
acquiring, from the data package according to the file ID of the contact file, the contact information of the contact comprised in the contact group; and
storing a correspondence between the user identifier of the user, the group ID of the contact group, and the contact information of the contact comprised in the contact group.

2. The method according to claim 1, wherein the acquiring, from the data package, the group ID of the contact group and the file ID of the contact file corresponding to the contact group comprises:
acquiring the configuration file from the data package; and
acquiring, from the configuration file, the group ID of the contact group and the file ID of the contact file corresponding to the contact group.

3. The method according to claim 1, wherein the acquiring, from the data package according to the file ID of the contact file, the contact information of the contact comprised in the contact group comprises:
acquiring, from the data package according to the file ID of the contact file corresponding to the contact group, the contact file corresponding to the contact group; and
acquiring, from the contact file corresponding to the contact group, the contact information of the contact comprised in the contact group.

4. A method for exporting the contact imported according to any one of claims 1 to 3, wherein the method comprises:
receiving an export request message sent by a terminal, wherein the export request message carries a user identifier of a user and a contact export manner;
if the contact export manner is a manner of exporting all contacts, acquiring a group ID of a corresponding contact group and contact information comprised in the contact group from a stored correspondence between a user identifier, a group identifier ID of a contact group, and contact information according to the user identifier of the user; and
sending the group ID of the contact group and the contact information comprised in the contact group to the terminal.

5. The method according to claim 4, wherein the sending the group ID of the contact group corresponding to the user and the contact information comprised in the contact group corresponding to the user to the terminal comprises:
creating a contact file corresponding to the contact group according to the contact information comprised in the contact group, wherein the contact file corresponding to the contact group is used to store contact information of a contact comprised in the contact group;
storing, in a configuration file, a correspondence between the group ID of the contact group and a file ID of the contact file corresponding to the contact group; and
packaging the configuration file and the contact file that is corresponding to the contact group into a data package, and sending an export response message to the terminal, wherein the export response message carries the data package.

6. The method according to claim 4, wherein, if the contact export manner is a manner of exporting one or more contacts, the export request message further carries contact ID(s) of the one or more contacts who need to be exported; and
before the sending the group ID of the contact group and the contact information comprised in the contact group to the terminal, the method further comprises:
acquiring, from the stored correspondence between a user identifier, a group ID of a contact group, and contact information according to the user identifier of the user and the contact ID of the contact who needs to be exported, contact information of the contact who needs to be exported and a group ID of a contact group to which the contact who needs to be exported belongs.

7. The method according to claim 4, wherein, if the contact export manner is a manner of exporting a contact group, the export request message further carries a group ID(s) of one or more contact groups that need to be exported; and
before the sending the group ID of the contact group and the contact information comprised in the contact group to the terminal, the method further comprises:
acquiring contact information of a contact comprised in the contact group from the stored correspondence between a user identifier, a group ID of a contact group, and contact information according to the user identifier of the user and the group ID of the contact group.

8. An apparatus for importing a contact, wherein the apparatus comprises:
a first receiving module, configured to receive a user identifier of a user and a data package that are sent by a terminal, wherein the data package comprises a configuration file and a contact file that is corresponding to a contact group, the configuration file is used to store a correspondence between a group identifier ID of the contact group and a file ID of the contact file, and the contact file corresponding to the contact group is used to store contact information of a contact comprised in the contact group;
a first acquiring module, configured to acquire, from the data package, the group ID of the contact group and the file ID of the contact file corresponding to the contact group;
a second acquiring module, configured to acquire, from the data package according to the file ID of the contact file, the contact information of the contact comprised in the contact group; and
a storage module, configured to store a correspondence between the user identifier of the user, the group ID of the contact group, and the contact information of the contact comprised in the contact group.

9. The apparatus according to claim 8, wherein the first acquiring module comprises:
a first acquiring unit, configured to acquire the configuration file from the data package; and
a second acquiring unit, configured to acquire, from the configuration file, the group ID of the contact group and the file ID of the contact file corresponding to the contact group.

10. The apparatus according to claim 8, wherein the second acquiring module comprises:
a third acquiring unit, configured to acquire, from the data package according to the file ID of the contact file corresponding to the contact group, the contact file corresponding to the contact group; and
a fourth acquiring unit, configured to acquire, from the contact file corresponding to the contact group, the contact information of the contact comprised in the contact group.

11. An apparatus for exporting the contact imported according to any one of claims 8 to 10, wherein the apparatus comprises:
a second receiving module, configured to receive an export request message sent by a terminal, wherein the export request message carries a user identifier of a user and a contact export manner;
a third acquiring module, configured to: if the contact export manner is a manner of exporting all contacts, acquire a group ID of a corresponding contact group and contact information comprised in the contact group from a stored correspondence between a user identifier, a group identifier ID of a contact group, and contact information according to the user identifier of the user; and
a sending module, configured to send the group ID of the contact group and the contact information comprised in the contact group to the terminal.

12. The apparatus according to claim 11, wherein the sending module comprises:
a creating unit, configured to create a contact file corresponding to the contact group according to the contact information comprised in the contact group, wherein the contact file corresponding to the contact group is used to store contact information of a contact comprised in the contact group;
a storage unit, configured to store, in a configuration file, a correspondence between the group ID of the contact group and a file ID of the contact file corresponding to the contact group; and
a sending unit, configured to package the configuration file and the contact file that is corresponding to the contact group into a data package, and send an export response message to the terminal, wherein the export response message carries the data package.

13. The apparatus according to claim 11, wherein, if the contact export manner is a manner of exporting one or more contacts, the export request message further carries a contact ID of the one or more contacts who need to be exported; and
the apparatus further comprises:
a fourth acquiring module, configured to acquire, from the stored correspondence between a user identifier, a group ID of a contact group, and contact information according to the user identifier of the user and the contact ID of the contact who needs to be exported, contact information of the contact who needs to be exported and a group ID of a contact group to which the contact who needs to be exported belongs.

14. The apparatus according to claim 11, wherein, if the contact export manner is a manner of exporting a contact group, the export request message further carries group ID(s) of one or more contact groups that need to be exported; and
the apparatus further comprises:
a fifth acquiring module, configured to acquire contact information of a contact comprised in the contact group from the stored correspondence between a user identifier, a group ID of a contact group, and contact information according to the user identifier of the user and the group ID of the contact group.

15. An apparatus for importing a contact, wherein the apparatus comprises a first memory and a first processor, which are configured to execute the method for importing a contact according to any one of claims 1 to 3.

16. An apparatus for exporting the contact imported according to claim 15, wherein the apparatus comprises a second memory and a second processor, which are configured to execute the method for exporting a contact according to any one of claims 4 to 7.
